# EUROPÄISCHE PATENTSCHRIFT

(11) **EP 4 029 119 B1**
(45) Veröffentlichungstag und Bekanntmachung des Hinweises auf die Patenterteilung: **22.10.2025**
(21) Anmeldenummer: 20767722.0
(22) Anmeldetag: 25.08.2020
(51) Int. Cl.: H02K 1/276, H02K 7/04, H02K 15/165

(54) **ROTOR, ELEKTROMOTOR UND VERFAHREN ZUR UNWUCHTVERRINGERUNG EINES ROTORS**
ROTOR, ELECTRIC MOTOR AND METHOD FOR REDUCING THE UNBALANCE OF A ROTOR
ROTOR, MOTEUR ÉLECTRIQUE ET PROCÉDÉ POUR RÉDUIRE LE DÉSÉQUILIBRE D'UN ROTOR

(30) Priorität: 10.09.2019 DE 102019124186
(43) Veröffentlichungstag der Anmeldung: 20.07.2022
(73) Patentinhaber: Schaeffler Technologies AG & Co. KG, 91074 Herzogenaurach (DE)
(72) Erfinder: WISBAR, Patrick, 76437 Rastatt (DE); FISCHER, Alexandre, 67000 Strasbourg (FR); FRITZ, Thomas, 76287 Rheinstetten (DE)
(86) Internationale Anmeldenummer: PCT/DE2020/100748
(87) Internationale Veröffentlichungsnummer: WO 2021/047726

(56) Entgegenhaltungen:
- DE-A1- 102018 001 138
- FR-A1- 2 421 498
- JP-A- 2002 218 726

## Beschreibung

Die Erfindung betrifft einen Rotor nach Anspruch 1. Weiterhin betrifft die Erfindung einen Elektromotor mit einem Rotor und ein Verfahren zur Unwuchtverringerung eines Rotors.

Ein Elektromotor ist allgemein bekannt. Dieser weist einen Stator und einen gegenüber dem Stator um eine Drehachse drehbaren Rotor mit einem Rotorblechpaket, bestehend aus mehreren axial nebeneinander angeordneten Rotorblechen auf. In dem Rotorblechpaket sind mehrere Magnetaussparungen, in denen jeweils Magnete angeordnet und befestigt sind, angeordnet. Die Magnete können das durch den Stator bereitgestellte Magnetfeld in ein Drehmoment an dem Rotor umsetzen.

Zur Verringerung der dynamischen Belastungen auf den Elektromotor ist es erforderlich, die Unwucht des drehbaren Rotors möglichst gering zu halten. Gerade bei den hohen Drehzahlen eines Elektromotors ist eine auch nur geringe Unwucht für einen zuverlässigen und effizienten Betrieb nachteilig. Nach Zusammenbau des Rotorblechpakets und Aufbau des Rotors ist bekannt, die Unwucht über Messungen zu erfassen und anschließend durch abtragende Materialbearbeitung oder durch Massenerhöhung, beispielsweise durch Anbringen von Ausgleichsmassen, zu verringern. Dabei ist der Materialabtrag durch spanende oder bohrende Bearbeitung äußerst kritisch bei dem die Magnete aufweisenden Rotor, da sich die abgetragenen Materialpartikel an den Magneten anheften und den Betrieb des Elektromotors äußerst beeinträchtigen können.

Ein Rotor für einen Elektromotor gemäß dem Oberbegriff des Anspruch1 ist in der DE 10 2018 001138 A1 offenbart. Weiterer Stand der Technik findet sich in der JP 2002 218726 A sowie FR 2 421 498 A1.

Die Aufgabe der vorliegenden Erfindung besteht darin, die Unwucht eines Rotors zu verringern. Weiterhin soll der Rotor einfacher, schneller und zuverlässiger aufgebaut werden können. Die Gefahr einer Fehlmontage des Rotorblechs in dem Rotorblechpaket soll verringert werden. Der Elektromotor soll einfacher, zuverlässiger und kostengünstiger aufgebaut sein. Die Unwucht innerhalb von dem Rotor soll bereits konstruktiv oder vor dem Zusammenbau verringert werden.

Wenigstens eine dieser Aufgaben wird durch einen Rotor mit den Merkmalen nach Anspruch 1 gelöst. Dadurch kann über die abweichende Aussparung eine vorgegebene Ausrichtung des Rotorblechs schnell und einfach umgesetzt werden und durch das gleiche Aussparungsvolumen die Unwucht des Rotorblechs verringert werden. Beispielsweise kann die vorgegebene Ausrichtung bei einem Zusammenbau des Rotorblechpakets oder bei einer weiteren Bearbeitung des Rotorblechs gefordert sein.

Die Magnetaussparungen können in dem ersten und/oder zweiten Rotorblech angeordnet sein. Die Magnetaussparungen können aus dem jeweiligen Rotorblech gestanzt sein.

Die Magnete können Permanentmagnete sein. Die Magnete können in dem Rotorblechpaket form-, kraft- oder stoffschlüssig befestigt sein. Die Magnete können in dem Rotorblechpaket durch Klebstoff eingeklebt sein.

Die Aussparungen können aus dem jeweiligen Rotorblech gestanzt sein. Die veränderte Form der ersten Aussparung kann eine gezielte Montageausrichtung des zugeordneten Rotorblechs in dem Rotorblechpaket ermöglichen. Die Aussparungen können auf einem gemeinsamen mittleren Durchmesser angeordnet sein. Die Aussparungen können drehsymmetrisch angeordnet sein.

In einer bevorzugten Ausführung der Erfindung weist zusätzlich zu der ersten Aussparung eine zweite Aussparung der mehreren Aussparungen gegenüber der Mehrzahl der Aussparungen eine veränderte Form aber ein gleiches Aussparungsvolumen wie die Mehrzahl der Aussparungen auf, wobei die zweite Aussparung gegenüber der ersten Aussparung um einen Winkel ungleich 180° versetzt angeordnet ist. Dadurch kann zusätzlich zu der vorgegebenen Ausrichtung eine festgelegte Seitenausrichtung des Rotorblechs erfüllt werden.

In einer speziellen Ausführung der Erfindung sind die Aussparungen radial innerhalb von den Magnetaussparungen angeordnet. Dadurch kann die Auswirkung der veränderten Form auf die Unwucht verringert werden.

In einer weiteren speziellen Ausführung der Erfindung sind die Aussparungen vollumfänglich und äquidistant angeordnet.

In einer bevorzugten Ausführung der Erfindung weist in dem die Aussparungen aufweisenden Rotorblech zur Verringerung der Unwucht des Rotorblechs wenigstens eine der Aussparungen oder wenigstens eine erste Aussparung von mehreren weiteren Aussparungen ein gegenüber der Mehrzahl der jeweiligen Aussparungen verändertes Aussparungsvolumen auf. Dadurch kann eine Feinabstimmung der Unwucht vorgenommen werden.

In einer speziellen Ausführung der Erfindung sind die Aussparungen Kühlfluidöffnungen zur Durchströmung mit einem Kühlfluid zur Kühlung des Rotorblechpakets.

Weiterhin wird zur Lösung wenigstens einer der zuvor angegebenen Aufgaben ein Rotor nach Anspruch 1, wobei das erste Rotorblech eine erste Unwucht und das zweite Rotorblech eine zweite Unwucht aufweist und das erste Rotorblech in dem Rotorblechpaket gegenüber dem zweiten Rotorblech zur Verringerung einer Gesamtunwucht des Rotorblechpaktes um einen Versatzwinkel verdreht ausgerichtet ist. Dadurch kann eine systematische Unwucht in dem Rotorblechpaket verringert werden. Eine systematisch vorhandene Unwucht an den Rotorblechen kann eine durch eine gleichbleibende Umfangsposition gekennzeichnete Unwucht sein, die insbesondere über einen Walzvorgang der Rotorbleche entstehen kann.

In einer bevorzugten Ausführung der Erfindung ist der Versatzwinkel durch eine ganzzahlige Teilung des vollen Umfangs gebildet. Der Versatzwinkel kann abhängig von der Anzahl an Rotorblechen in einem Rotorblechverbund sein, innerhalb dessen die Summe der einzelnen Versatzwinkel gleich 360° ist. Das Rotorblechpaket kann wenigstens einen Rotorblechverbund oder auch mehrere davon axial hintereinander angeordnet aufweisen. Bei einer Anzahl von zwei kann der Versatzwinkel 180°, bei einer Anzahl von drei kann der Versatzwinkel 120°, bei einer Anzahl von vier kann der Versatzwinkel 90°, bei einer Anzahl von sechs kann der Versatzwinkel 60°, bei einer Anzahl von acht kann der Versatzwinkel 45° und bei einer Anzahl von zwölf Rotorblechen innerhalb von einem Rotorblechverbund kann der Versatzwinkel 30° sein.

Weiterhin wird zur Lösung wenigstens einer der zuvor angegebenen Aufgaben ein Elektromotor für einen Antriebsstrang eines Fahrzeugs vorgeschlagen, aufweisend einen Stator und einen gegenüber dem Stator drehbaren Rotor mit wenigstens einem der zuvor genannten Merkmale.

Der Elektromotor kann ein permanenterregter Synchronmotor sein. Der Elektromotor kann ein Antriebsdrehmoment zur Bewegung des Fahrzeugs bereitstellen. Der Antriebsstrang kann ein Hybridantriebsstrang sein. Das Fahrzeug kann ein Elektrofahrzeug sein.

Weiterhin wird zur Lösung wenigstens einer der zuvor genannten Aufgaben ein Verfahren zur Unwuchtverringerung eines Rotors nach Anspruch 1, wobei die Magnete durch Klebstoff befestigt sind und die Unwucht des Rotorblechpakets mit Magneten verringert wird, indem eine Gesamtunwucht des Rotorblechpakets erfasst wird, eine erste Umfangsposition im Bereich einer Magnetaussparung und eine Massedifferenz durch Masseerhöhung festgelegt, über die bei angenommener Masseerhöhung um die Massedifferenz an der ersten Umfangsposition die Gesamtunwucht verringert wird und anschließend an wenigstens der ersten Umfangsposition weiterer Klebstoff im Umfang der Massedifferenz in die Magnetaussparung zur Verringerung der Gesamtunwucht eingebracht wird.

Weitere Vorteile und vorteilhafte Ausgestaltungen der Erfindung ergeben sich aus der Figurenbeschreibung und den Abbildungen.

Die Erfindung wird im Folgenden unter Bezugnahme auf die Abbildungen ausführlich beschrieben. Es zeigen im Einzelnen:
- Figur 1:: Eine räumliche Ansicht eines Elektromotors in einer speziellen Ausführungsform der Erfindung.
- Figur 2:: Einen Halbschnitt durch einen Elektromotor in einer weiteren speziellen Ausführungsform der Erfindung.
- Figur 3:: Eine Seitenansicht eines Rotorblechs eines Rotors in einer speziellen Ausführungsform der Erfindung.
- Figur 4:: Eine Seitenansicht mehrerer Rotorbleche eines Rotors in einer weiteren speziellen Ausführungsform der Erfindung.
- Figur 5:: Eine Seitenansicht eines Rotorblechpaktes eines Rotors in einer weiteren speziellen Ausführungsform der Erfindung.

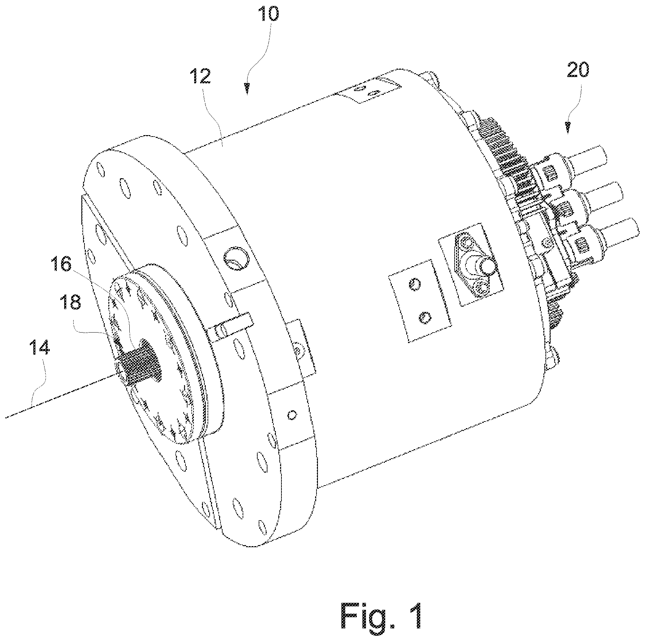

Figur 1 zeigt eine räumliche Ansicht eines Elektromotors 10 in einer speziellen Ausführungsform der Erfindung. Der Elektromotor 10 ist als permanenterregter Synchronmotor ausgeführt und weist einen Stator 12 und einen radial innerhalb von dem Stator 12 um eine Drehachse 14 drehbar angeordneten Rotor auf. Der Rotor ist mit einer Motorwelle 16 drehfest verbunden. Die Motorwelle 16 weist eine Verzahnung 18 zur Verbindung mit einem Anschlussbauteil zur Übertragung des von dem Rotor ausgelösten Antriebsdrehmoments auf.

Der Stator 12 wird über drei Motorphasenleitungen 20 mit elektrischer Energie versorgt. In dem Stator 12 sind mehrere durch Drahtwicklung aufgebaute Spulen angeordnet, über die die elektrische Energie in ein auf den Rotor wirkendes Magnetfeld umgesetzt wird. Die dadurch im Betrieb des Elektromotors 10 entstehende Wärmeenergie wird über eine Motorkühlung abgeführt.

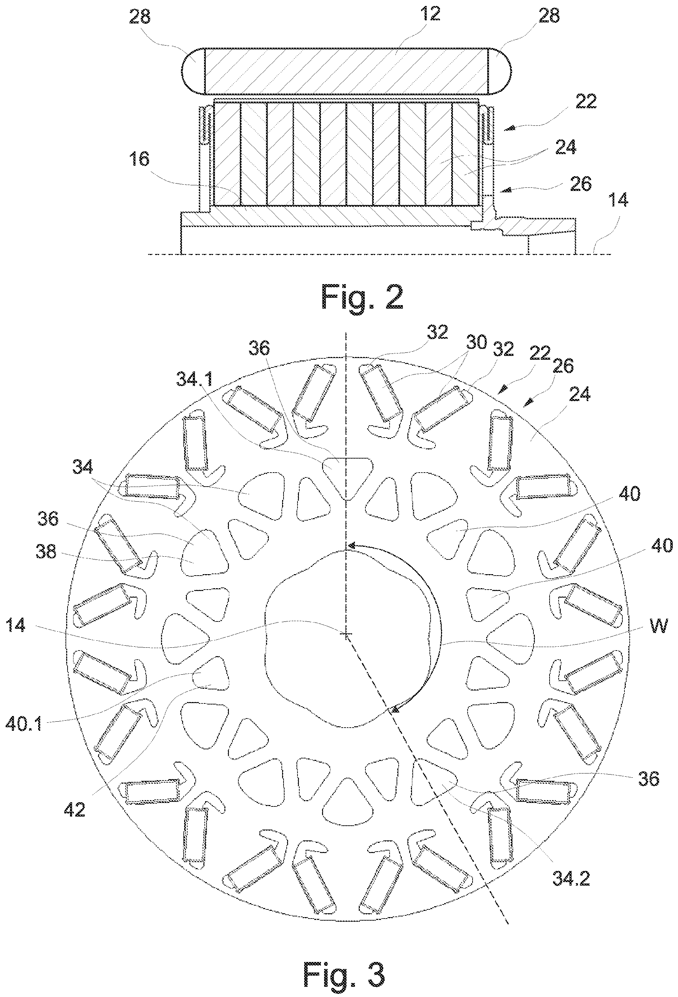

In Figur 2 ist ein Halbschnitt eines Elektromotors 10 in einer weiteren speziellen Ausführungsform der Erfindung dargestellt. Der Rotor 22 weist mehrere axial nebeneinander angeordnete und insgesamt um die Drehachse 14 drehbare Rotorbleche 24 auf, die mit der Motorwelle 16 drehfest verbunden sind und ein Rotorblechpaket 26 bilden. Die einzelnen Rotorbleche 24 können aus Blech gestanzt sein.

Der Stator 12 weist mehrere umfangsseitig verteilt angeordnete drahtgewickelte Spulen 28 auf, die mit elektrischer Energie versorgt werden können und davon abhängig ein auf das Rotorblechpaket 26 einwirkendes Magnetfeld auslösen. In dem Rotorblechpaket 26 sind Magnete, die als Permanentmagnete ausgeführt sind, aufgenommen. Die Magnete setzen das Magnetfeld in ein Drehmoment um, das auf die Motorwelle 16 übertragen wird.

Figur 3 zeigt eine Draufsicht auf ein Rotorblech 24 eines Rotors 22 in einer speziellen Ausführungsform der Erfindung. Das um die Drehachse 14 drehbare Rotorblech 24 ist einem Rotorblechpaket 26 zugeordnet und weist mehrere umfangsseitig verteilt angeordnete Magnete 30 auf, die in einer jeweiligen, bevorzugt aus dem Rotorblech 24 gestanzten, Magnetaussparung 32 in dem Rotorblech 24 aufgenommen sind. Die Magnete 30 sind als Permanentmagnete ausgeführt und gleichmäßig umfangsseitig verteilt, um eine Unwucht des Rotorblechs 24 möglichst gering zu halten und eine geforderte Polanzahl in dem Rotorblech 24 bereitzustellen. Die Magnete 30 sind in der jeweiligen Magnetaussparung 32 mit einem Klebstoff eingeklebt. Die Magnetaussparung 32 greift insbesondere axial durch das Rotorblech 24 durch und der Magnet 30 ist in der Magnetaussparung 32 axial durchgängig angeordnet.

In einem radial innerhalb von den Magnetaussparungen 32 liegenden Ringabschnitt sind mehrere Aussparungen 34 umfangsseitig verteilt angeordnet. Die Aussparungen 34 können Kühlfluidöffnungen zur Durchströmung mit einem Kühlfluid zur Kühlung des Rotorblechpakets 26 sein. Die Aussparungen 34 sind vollumfänglich äquidistant angeordnet und in dem Rotorblech 24 axial durchgängig ausgeführt und weisen jeweils ein Aussparungsvolumen 36 auf, das durch eine axiale Länge und eine Querschnittsfläche 38 gebildet wird. Die Aussparungen 34 sind bevorzugt aus dem Rotorblech 24 gestanzt. Die Magnetaussparungen 32 und die Aussparungen 34 können in einem Stanzvorgang ausgeformt sein.

Eine erste Aussparung 34.1 der mehreren Aussparungen 34 weist gegenüber der Mehrzahl der Aussparungen 34 eine veränderte Form aber ein gleiches Aussparungsvolumen 36 wie die Mehrzahl der Aussparungen 34 auf. Die veränderte Form der ersten Aussparung 34.1 ermöglicht eine fehlerfreie Umsetzung einer vorgegebenen Ausrichtung des Rotorblechs 24, beispielsweise bei einem Zusammenbau des Rotorblechpakets 26 und verringert die Gefahr einer Fehlmontage des Rotorblechs 24 beim Zusammenbau zu dem Rotorblechpaket 26. Durch das gleichbleibende Aussparungsvolumen 36 wird die Unwucht des Rotorblechs 24 verringert.

Auch weist eine zweite Aussparung 34.2 der mehreren Aussparungen 34 gegenüber den die erste Aussparung 34.1 ausgenommenen verbleibenden Aussparungen 34 eine veränderte Form, die insbesondere gleich der Form der ersten Aussparung 34.1 ist, auf. Das Aussparungsvolumen 36 der zweiten Aussparung 34.1 ist gleich zu dem der Aussparungen 34. Die zweite Aussparung 34.2 ist gegenüber der ersten Aussparung 34.1 um einen Winkel W ungleich 180° versetzt angeordnet. Dadurch kann über die zweite Aussparung 34.2 in Verbindung mit der ersten Aussparung 34.1 zusätzlich zu der vorgegebenen Ausrichtung eine festgelegte Seitenausrichtung des Rotorblechs 24, insbesondere bei einem Zusammenbau des Rotorblechs 24 zu dem Rotorblechpaket 26 oder bei einer weiteren Bearbeitung, erfüllt werden.

In dem Rotorblech 24 sind weitere Aussparungen 40 vollumfänglich äquidistant angeordnet. Die weiteren Aussparungen 40 sind umfangsseitig abwechselnd zu den Aussparungen 34 angeordnet und bewirken eine Verringerung des Massenträgheitsmoments des Rotorblechs 24. Eine erste Aussparung 40.1 der weiteren Aussparungen 40 weist gegenüber der Mehrzahl der weiteren Aussparungen 40 ein verändertes Aussparungsvolumen 42 auf. Dadurch kann eine Unwucht in dem Rotorblech 24 weiter verringert werden.

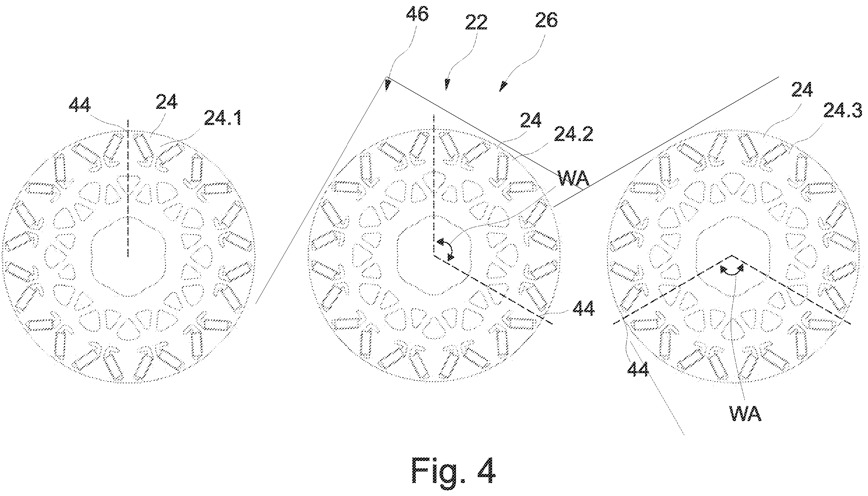

In Figur 4 ist eine Seitenansicht mehrerer Rotorbleche 24 eines Rotors 22 in einer weiteren speziellen Ausführungsform der Erfindung dargestellt. Die Rotorbleche 24 sind insgesamt in der umfangsseitigen Ausrichtung abgebildet, in der auch der Zusammenbau zu dem Rotorblechpaket 26 erfolgt. Eine systematisch vorhandene Unwucht an den Rotorblechen 24 ist beispielsweise eine durch eine gleichbleibende Umfangsposition 44 gekennzeichnete Unwucht. Insbesondere kann ein Walzvorgang bei der Herstellung der Rotorbleche 24 entlang einer gleichbleibenden Walzrichtung eine derartige systematische Unwucht auslösen.

Um diese systematische Unwucht zu verringern, werden die Rotorbleche 24 in einem wie hier abgebildeten aus drei Rotorblechen 24 bestehenden Rotorblechverbund 46 zusammengefasst. Der Rotorblechverbund 46 umfasst ein erstes Rotorblech 24.1 und ein zweites Rotorblech 24.2, das gegenüber dem ersten Rotorblech 24.1 um einen Versatzwinkel WA gleich 120° verdreht ausgerichtet ist. Ein drittes Rotorblech 24.3 ist gegenüber dem zweiten Rotorblech 24.2 um den Versatzwinkel WA verdreht angeordnet. Die Rotorbleche 24 bilden derart ausgerichtet den Rotorblechverbund 46 und werden in dieser Ausrichtung gegebenenfalls mit weiteren in einem jeweiligen Rotorblechverbund zusammengefassten und auch jeweils um den Versatzwinkel WA verdrehten Rotorblechen in dem Rotorblechpaket 26 zusammengesetzt.

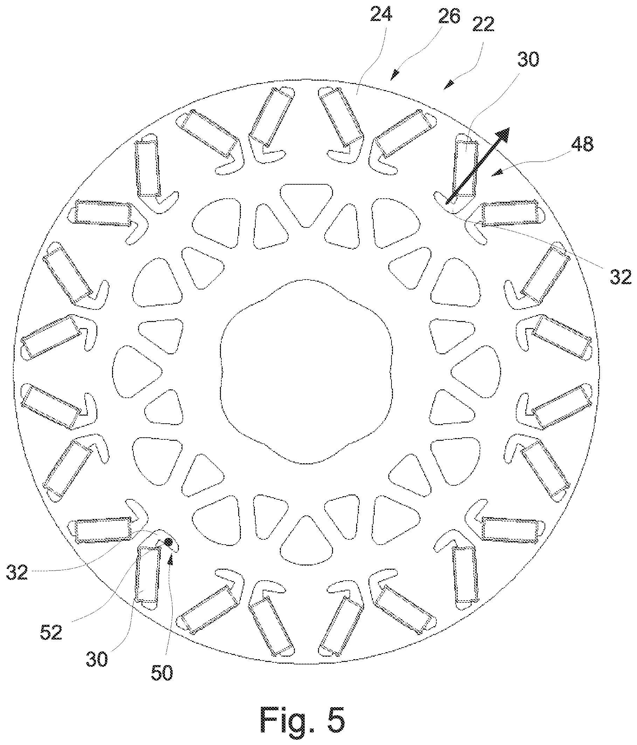

Figur 5 zeigt eine Seitenansicht eines Rotorblechpaktes 26 eines Rotors 22 in einer weiteren speziellen Ausführungsform der Erfindung. Die in dem Rotorblechpaket 26 angeordneten Magnete 30 sind in Magnetaussparungen 32 in den axial nebeneinander angeordneten Rotorblechen 24 eingebracht und durch Klebstoff befestigt. Die Magnetaussparungen 32 sind dabei größer ausgeführt als die darin angeordneten jeweiligen Magnete 30. Eine Unwucht des Rotorblechpakets 26 wird verringert, indem zunächst eine Gesamtunwucht des Rotorblechpakets 26 erfasst, beispielsweise gemessen wird. Die Gesamtunwucht wird auf eine wirksame Umfangsposition 48 zusammengeführt.

Anschließend wird eine erste Umfangsposition 50 und eine Massedifferenz festgelegt, über die bei angenommener Masseerhöhung um die Massedifferenz an der ersten Umfangsposition 50 die Gesamtunwucht verringert wird. Die erste Umfangsposition 50 ist der wirksamen Umfangsposition 48 radial gegenüberliegend angeordnet und wird auf den Bereich einer Magnetaussparung 32 beschränkt. Anschließend wird an der ersten Umfangsposition 50 weiterer Klebstoff 52 zur Masseerhöhung im Umfang der Massedifferenz in die Magnetaussparung 32 zur Verringerung der Gesamtunwucht eingebracht.

### Bezugszeichenliste

- 10: Elektromotor
- 12: Stator
- 14: Drehachse
- 16: Motorwelle
- 18: Verzahnung
- 20: Motorphasenleitung
- 22: Rotor
- 24: Rotorblech
- 24.1: erstes Rotorblech
- 24.2: zweites Rotorblech
- 24.3: drittes Rotorblech
- 26: Rotorblechpaket
- 28: Spule
- 30: Magnet
- 32: Magnetaussparung
- 34: Aussparung
- 34.1: erste Aussparung
- 34.2: zweite Aussparung
- 36: Aussparungsvolumen
- 38: Querschnittsfläche
- 40: Aussparung
- 40.1: erste Aussparung
- 42: Aussparungsvolumen
- 44: Umfangsposition
- 46: Rotorblechverbund
- 48: Umfangsposition
- 50: Umfangsposition

- W: Winkel
- WA: Versatzwinkel

## Patentansprüche

1. Rotor (22) für einen Elektromotor (10), aufweisend
ein um eine Drehachse (14) drehbares Rotorblechpaket (26) mit einem ersten Rotorblech (24.1) und einen axial neben dem ersten Rotorblech (24.1) angeordneten zweiten Rotorblech (24.2) und mit mehreren Magnetaussparungen (32), in denen jeweils Magnete (30) angeordnet und befestigt sind, wobei in wenigstens einem der Rotorbleche (24, 24.1, 24.2) umfangsseitig verteilt angeordnete und ein jeweiliges Aussparungsvolumen (36) aufweisende, von den Magnetaussparungen (32) getrennt ausgeführte Aussparungen (34) eingebracht sind,
**dadurch gekennzeichnet, dass**
wenigstens eine erste Aussparung (34.1) der mehreren Aussparungen (34) gegenüber der Mehrzahl der Aussparungen (34) eine veränderte Form aber ein gleiches Aussparungsvolumen (36) wie die Mehrzahl der Aussparungen (34) aufweist.

2. Rotor (22) nach Anspruch 1, wobei zusätzlich zu der ersten Aussparung (34.1) eine zweite Aussparung (34.2) der mehreren Aussparungen (34) gegenüber der Mehrzahl der Aussparungen (34) eine veränderte Form aber ein gleiches Aussparungsvolumen (36) wie die Mehrzahl der Aussparungen (34) aufweist, wobei die zweite Aussparung (34.2) gegenüber der ersten Aussparung (34.1) um einen Winkel (W) ungleich 180° versetzt angeordnet ist.

3. Rotor (22) nach Anspruch 1 oder 2, wobei die Aussparungen (34) radial innerhalb von den Magnetaussparungen (32) angeordnet sind.

4. Rotor (22) nach einem der vorangehenden Ansprüche, wobei die Aussparungen (34) vollumfänglich und äquidistant angeordnet sind.

5. Rotor (22) nach einem der vorangehenden Ansprüche, wobei in dem die Aussparungen (34) aufweisenden Rotorblech (24) zur Verringerung der Unwucht des Rotorblechs (24) wenigstens eine der Aussparungen (34) oder wenigstens eine erste Aussparung (40.1) von mehreren weiteren Aussparungen (40) ein gegenüber der Mehrzahl der jeweiligen Aussparungen (34, 40) verändertes Aussparungsvolumen (36, 42) aufweist.

6. Rotor (22) nach einem der vorangehenden Ansprüche, wobei die Aussparungen (34) Kühlfluidöffnungen zur Durchströmung mit einem Kühlfluid zur Kühlung des Rotorblechpakets (26) sind.

7. Rotor (22) nach einem der vorangehenden Ansprüche,
**dadurch gekennzeichnet, dass**
das erste Rotorblech (24.1) eine erste Unwucht und das zweite Rotorblech (24.2) eine zweite Unwucht aufweist und das erste Rotorblech (24.1) in dem Rotorblechpaket (26) gegenüber dem zweiten Rotorblech (24.2) zur Verringerung einer Gesamtunwucht des Rotorblechpaktes (26) um einen Versatzwinkel (WA) verdreht ausgerichtet ist.

8. Rotor (22) nach Anspruch 7, wobei der Versatzwinkel (WA) durch eine ganzzahlige Teilung des vollen Umfangs gebildet ist.

9. Elektromotor (10) für einen Antriebsstrang eines Fahrzeugs, aufweisend einen Stator (12) und einen gegenüber dem Stator (12) drehbaren Rotor (22) nach einem der vorangehenden Ansprüche.

10. Verfahren zur Unwuchtverringerung eines Rotors (22) nach einem der vorangehenden Ansprüche, wobei die Magnete (30) durch Klebstoff befestigt sind und die Unwucht des Rotorblechpakets (26) mit Magneten (30) verringert wird, indem
eine Gesamtunwucht des Rotorblechpakets (26) erfasst wird,
eine erste Umfangsposition (50) im Bereich einer Magnetaussparung (32) und eine Massedifferenz durch Masseerhöhung festgelegt, über die bei angenommener Masseerhöhung um die Massedifferenz an der ersten Umfangsposition (50) die Gesamtunwucht verringert wird und anschließend an wenigstens der ersten Umfangsposition (50) weiterer Klebstoff im Umfang der Massedifferenz in die Magnetaussparung (32) zur Verringerung der Gesamtunwucht eingebracht wird.

## Claims

1. A rotor (22) for an electric motor (10), having
a laminated rotor core (26) rotatable about an axis of rotation (14) having a first rotor lamination (24.1) and a second rotor lamination (24.2) arranged axially next to the first rotor lamination (24.1) and with multiple magnet cutouts (32), in each of which magnets (30) are arranged and secured, wherein circumferentially distributed cutouts (34) are arranged in at least one of the rotor laminations (24, 24.1, 24.2) and said circumferentially distributed cutouts each have a cutout volume (36) and are formed separately from the magnet cutouts (32),
**characterised in that**
at least a first cutout (34.1) of the multiple cutouts (34) has a different shape than the majority of cutouts (34) but the same cutout volume (36) as the multiple cutouts (34).

2. The rotor (22) according to claim 1, wherein in addition to the first cutout (34.1), a second cutout (34.2) of the multiple cutouts (34) has a different shape than the multiple cutouts (34) but a same cutout volume (36) as the multiple cutouts (34), wherein the second cutout (34.2) is arranged offset from the first cutout (34.1) by an angle (W) not equal to 180°.

3. The rotor (22) according to claim 1 or claim 2, wherein the cutouts (34) are arranged radially inward of the magnet cutouts (32).

4. The rotor (22) according to one of the preceding claims, wherein the cutouts (34) are arranged equidistantly around the entire circumference.

5. The rotor (22) according to one of the preceding claims, wherein in the rotor lamination (24) having the cutouts (34), in order to reduce the imbalance of the rotor lamination (24), at least one of the cutouts (34) or at least a first cutout (40.1) of multiple further cutouts (40) has a cutout volume (36, 42) that is different from that of the multiple the respective cutouts (34, 40).

6. The rotor (22) according to one of the preceding claims, wherein the cutouts (34) are cooling fluid openings through which a cooling fluid can flow for cooling the laminated rotor core (26).

7. The rotor (22) according to one of the preceding claims,
**characterised in that**
the first rotor lamination (24.1) has a first imbalance and the second rotor lamination (24.2) has a second imbalance, and the first rotor lamination (24.1) in the laminated rotor core (26) is rotated by an offset angle (WA) with respect to the second rotor lamination (24.2) in order to reduce an overall imbalance of the laminated rotor core (26).

8. The rotor (22) according to claim 7, wherein the offset angle (WA) is formed by an integer division of the full circumference.

9. An electric motor (10) for a drive train of a vehicle, having a stator (12) and a rotor (22) according to one of the preceding claims rotatable relative to the stator (12).

10. A method for reducing the imbalance of a rotor (22) according to one of the preceding claims, wherein the magnets (30) are secured by adhesive and the imbalance of the rotor core (26) with magnets (30) is reduced by
detecting a total imbalance of the rotor core (26),
specifying a first circumferential position (50) in the area of a magnet cutout (32) and specifying a mass difference by increasing the mass, via which the overall imbalance is reduced assuming an increase in mass by the mass difference at the first circumferential position (50), and subsequently, at least at the first circumferential position (50), introducing further adhesive in the amount of the mass difference into the magnet cutout (32) in order to reduce the overall imbalance.

## Revendications

1. Rotor (22) pour un moteur électrique (10), présentant
un empilement de tôles de rotor (26) rotatif autour d'un axe de rotation (14) comportant une première tôle de rotor (24.1) et une seconde tôle de rotor (24.2) agencée axialement à côté de la première tôle de rotor (24.1) et comportant plusieurs évidements magnétiques (32), dans lesquels sont respectivement agencés et fixés des aimants (30), des évidements (34) étant ménagés dans au moins une des tôles de rotor (24, 24.1, 24.2), agencés de manière à être répartis de manière circonférentielle, présentant un volume d'évidement (36) respectif et étant réalisés séparément des évidements magnétiques (32),
**caractérisé en ce que**
au moins un premier évidement (34.1) des multiples évidements (34) présente une forme modifiée par rapport à la pluralité d'évidements (34) mais un même volume d'évidement (36) que la pluralité d'évidements (34).

2. Rotor (22) selon la revendication 1, dans lequel en plus du premier évidement (34.1), un second évidement (34.2) des multiples évidements (34) présente une forme modifiée par rapport à la pluralité d'évidements (34) mais un même volume d'évidement (36) que la pluralité d'évidements (34), le second évidement (34.2) étant agencé de manière à être décalé d'un angle (W) différent de 180° par rapport au premier évidement (34.1).

3. Rotor (22) selon la revendication 1 ou 2, dans lequel les évidements (34) sont agencés radialement à l'intérieur des évidements magnétiques (32).

4. Rotor (22) selon l'une quelconque des revendications précédentes, dans lequel les évidements (34) sont agencés sur toute la circonférence et de manière équidistante.

5. Rotor (22) selon l'une quelconque des revendications précédentes, dans lequel, dans la tôle de rotor (24) présentant les évidements (34), afin de réduire le déséquilibre de la tôle de rotor (24), au moins l'un des évidements (34) ou au moins un premier évidement (40.1) de plusieurs autres évidements (40) présente un volume d'évidement (36, 42) qui est modifié par rapport à la pluralité d'évidements (34, 40) respectifs.

6. Rotor (22) selon l'une quelconque des revendications précédentes, dans lequel les évidements (34) sont des ouvertures de fluide de refroidissement pour l'écoulement d'un fluide de refroidissement pour refroidir l'empilement de tôles de rotor (26).

7. Rotor (22) selon l'une quelconque des revendications précédentes,
**caractérisé en ce que**
la première tôle de rotor (24.1) présente un premier déséquilibre et la seconde tôle de rotor (24.2) présente un second déséquilibre, et la première tôle de rotor (24.1) dans l'empilement de tôles de rotor (26) est orientée de manière à être tournée d'un angle de décalage (WA) par rapport à la seconde tôle de rotor (24.2) pour réduire un déséquilibre global de l'empilement de tôles de rotor (26).

8. Rotor (22) selon la revendication 7, dans lequel l'angle de décalage (WA) est formé par une division entière de la circonférence totale.

9. Moteur électrique (10) pour une chaîne cinématique d'un véhicule, présentant un stator (12) et un rotor (22) selon l'une quelconque des revendications précédentes qui est rotatif par rapport au stator (12).

10. Procédé de réduction de déséquilibre d'un rotor (22) selon l'une quelconque des revendications précédentes, dans lequel les aimants (30) sont fixés par adhésif et le déséquilibre de l'empilement de tôles de rotor (26) comportant les aimants (30) est réduit en ce que
un déséquilibre total de l'empilement de tôles de rotor (26) est détecté,
une première position circonférentielle (50) dans la région d'un évidement magnétique (32) et une différence de masse sont définies par augmentation de masse, par laquelle différence le déséquilibre global est réduit à la première position circonférentielle (50) en supposant une augmentation de masse de la différence de masse, puis, au moins à la première position circonférentielle (50), un adhésif supplémentaire est introduit dans l'évidement magnétique (32) d'une ampleur de la différence de masse afin de réduire le déséquilibre global.
